# EUROPEAN PATENT SPECIFICATION

(11) **EP 2 895 942 B1**
(45) Date of publication and mention of the grant of the patent: **14.07.2021**
(21) Application number: 13837827.8
(22) Date of filing: 12.09.2013
(51) Int. Cl.: G06F 3/041, G09F 9/00, G06F 1/16, G06F 3/044, G06F 3/045

(54) **FOLDABLE TOUCH SENSOR ASSEMBLY**
FALTBARE BERÜHRUNGSSENSORANORDNUNG
ENSEMBLE CAPTEUR TACTILE PLIABLE

(30) Priority: 14.09.2012 US 201261701327 P
(43) Date of publication of application: 22.07.2015
(73) Proprietor: Future Tech Capital LLC, Cupertino, CA 95014 (US)
(72) Inventor: PETCAVICH, Robert J., The Woodlands, Texas 77381 (US); KILLION, Reed J., The Woodlands, Texas 77381 (US)
(74) Representative: Beck Greener LLP
(86) International application number: PCT/US2013/059422
(87) International publication number: WO 2014/043325

(56) References cited:
- WO-A1-2004/001704
- WO-A1-2005/093548
- WO-A1-2006/064456
- WO-A1-2007/094993
- DE-U1- 20 118 593
- KR-A- 20100 070 092
- US-A1- 2010 195 279
- US-A1- 2012 127 113
- None

## Description

### BACKGROUND

This disclosure relates generally to flexible and printed electronics ("FPE"). More particularly, the present disclosure relates to multi-touch input surfaces that are foldable, roll- able, and conformable to make available a multi-touch sensor surface area for interconnection to electronic devices.

Touch screen technology has become an important component of many modern electronics, such as tablet computers and cellular phones. Typically, touch screen technology incorporates the use of resistive or capacitive sensor layers which make up part of the display.

Capacitive and resistive touchscreens are typically rigid (e.g., glass) screens that form the main interface of most modern day touch screen devices. Users employ their fingers as conductors, in order to interact with the electronic device, but are limited to the small working area of the rigid screens. Additionally, the rigidity of the screen limits the storage and portability of the electronic device while increasing the risk of damage to the device when it makes forceful contact with a hard surface (e.g., a device falling to the ground).
WO-A-2006/064,456 discloses a rollable display panel, which is connected to a housing of a modular stick. The display panel may be unrolled for use and is capable of being joined to other rollable displays and/or modular sticks of the same kind, so as to provide a user with a larger or double sided display.
WO-A-2005/093,548 discloses a method and apparatus for controlling a visual display on a display panel by applying a bending force to the display panel. The bending force is detected, and visual display is modified in accordance with a predetermined relationship between the bending force and the visual display. US-A-2010/195,279 discloses a docking station kit for a personal electronic device such as a mobile phone. The docking station kit comprises a docking support having defined therein a first compartment space in which the personal electronic device is dockable and a second compartment space in which a modular accessory for the personal electronic device is dockable.
US-A-2012/127,113 discloses a flexible resistive touch sensor structure including a roll of first and a roll of second flexible transparent substrates. First connection wires and second connection wires are provided together with spacer dots and insulation frames. WO-A-2007/094,993 discloses a flexible, resilient capacitive sensor suitable for large scale manufacturing. The sensor comprises a dielectric, and electrically conductive layer on the first side of the dielectric layer, and electrically conductive layer on a second side of the dielectric layer and capacitance meter electrically connected to the two conductive layers to detect changes in capacitance upon application of a force to the detector.
According to the present invention, there is provided a touch sensor assembly, comprising: a flexible top side assembly comprising a rollable touch sensor having an active touch sensor area that is configured to sense the location of a touch event by a user thereon, wherein the rollable touch sensor further comprises a flexible, rollable dielectric substrate, a first plurality of conductive lines, a second plurality of conductive lines, a pair of flexible, rollable protective cover layers covering the first plurality of conductive lines and the second plurality of conductive lines, and a scratch resistant coating composed of multifunctional acrylic monomers disposed on at least one of the pair of the protective cover layers, wherein, the rollable touch sensor is configured to be rolled and deformed without losing electrical conductivity; a rigid support assembly including a receptacle that is configured to receive and hold an electronic device, characterised in that the rigid support assembly further comprises a hinged mechanism configured to releasably couple the flexible top side assembly to the rigid support assembly and to allow the flexible top side assembly to rotate about mechanism relative to the rigid support assembly during operation.

### SUMMARY

The invention is defined by the independent claim. Further aspects of the invention are outlined in the dependent claims. Embodiments which do not fall within the scope of the claims do not describe part of the present invention.

The present disclosure relates to a touch sensor assembly. In an embodiment, the touch sensor assembly includes a rollable touch sensor further including an active touch sensor area that is configured to sense the location of a touch event by a user thereon, wherein the rollable touch sensor is configured to be rolled and deformed without losing electrical conductivity. In addition, the touch sensor assembly includes a support assembly coupled to the rollable touch sensor, the support assembly including a receptacle that is configured to receive and hold an electronic device.

Some embodiments are directed to a touch sensor assembly for use with an electronics device. In an embodiment, the touch sensor assembly includes a flexible, rollable touch sensor configured to be electrically coupled to the electronics device such that a touch event on the touch sensor acts as an input to the electronics device, wherein the touch sensor is configured to be rolled, flexed, and folded while still maintaining electrical conductivity therethrough. In addition, the touch sensor assembly includes a rigid support assembly coupled to the touch sensor and configured to receive and secure the electronics device.

Other embodiments also are directed to a touch sensor assembly for use with an electronics device. In an embodiment, the touch sensor assembly includes a flexible, rollable touch sensor configured to be electrically coupled to the electronics device, the touch sensor including an active touch sensor area that is configured to sense the location of a touch event by a user thereon, wherein the touch event acts as an input to the electronics device, and wherein the touch sensor is configured to maintain a minimum radius of curvature of 1 millimeter while still maintaining electrical conductivity therethrough. In addition, the touch sensor assembly includes a support assembly pivotably coupled to the touch sensor, the support assembly including a receptacle that is configured to receive and hold the electronic device. The touch sensor further includes a programmable controller module configured to receive and process electrical signals from the active sensor area to determine the location of the touch event on the active sensor area.

### BRIEF DESCRIPTION OF THE DRAWINGS

For a detailed description of exemplary embodiments of the invention, reference will now be made to the accompanying drawings in which:
Figure 1 is a schematic top view of a flexible, rollable capacitive touch sensor film in accordance with the principles disclosed herein;
Figure 2 is a prospective view of the flexible capacitive touch sensor film of figure 1;
Figure 3 is a schematic top view of a pair of substrates that make up a flexible resistive touch sensor film in accordance with the principles disclosed herein;
Figure 4 is a prospective view of the flexible, rollable resistive touch sensor film comprised of the pair substrates shown in Figure 3;
Figure 5 is a side cross-sectional view of the flexible resistive touch sensor film of Figure 4;
Figure 6 is a schematic view of an embodiment of a system for fabricating the flexible capacitive touch sensor film of Figure 1 in accordance with the principles disclosed herein;
Figures 7A and 7B are schematic views of embodiments of high precision metering systems for use within the system of Figure 6;
Figure 8 is a schematic view of an embodiment of a system for fabricating the flexible resistive touch sensor film of Figure 4 in accordance with the principles disclosed herein;
Figures 9A and 9B are schematic views of embodiments of high precision metering systems for use within the system of Figure 8;
Figure 10 is a schematic perspective view of an embodiment of a flexible, foldable multi-touch sensor structure in accordance with the principles disclosed herein;
Figure 11 is a side view taken along section A-A in Figure 10;
Figure 12 is a perspective view of an embodiment of a touch sensor assembly in accordance with the principles disclosed herein;
Figure 13 is a side view of the touch sensor assembly of Figure 12;
Figure 14 is a perspective view of another embodiment of a touch sensor assembly in accordance with the principles disclosed herein; and
Figure 15 is a side view of the touch sensor assembly of Figure 14.

### DETAILED DESCRIPTION

The following discussion is directed to various exemplary embodiments. However, one skilled in the art will understand that the examples disclosed herein have broad application, and that the discussion of any embodiment is meant only to be exemplary of that embodiment, and not intended to suggest that the scope of the disclosure, including the claims, is limited to that embodiment.

Certain terms are used throughout the following description and claims to refer to particular features or components. As one skilled in the art will appreciate, different persons may refer to the same feature or component by different names. This document does not intend to distinguish between components or features that differ in name but not function. The drawing figures are not necessarily to scale. Certain features and components herein may be shown exaggerated in scale or in somewhat schematic form and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, that connection may be through a direct connection, or through an indirect connection via other devices, components, and connections. In addition, as used herein, the terms "axial" and "axially" generally mean along or parallel to a central axis (e.g., central axis of a body or a port), while the terms "radial" and "radially" generally mean perpendicular to the central axis. For instance, an axial distance refers to a distance measured along or parallel to the central axis, and a radial distance means a distance measured perpendicular to the central axis.

As used herein, the word "approximately" means "plus or minus 10%." As used herein, the phrase "electronic device refers to any suitable device capable of receiving, sending, and processing an electronic signal, such as, for example, a mobile computing device, a smart phone, a laptop computer, a tablet computer, a desktop computer, an all-in-one computer, a personal digital assistant (PDA), a television, a music player (e.g., an mp3 player), a gaming device, remote control devices, or some combination thereof.

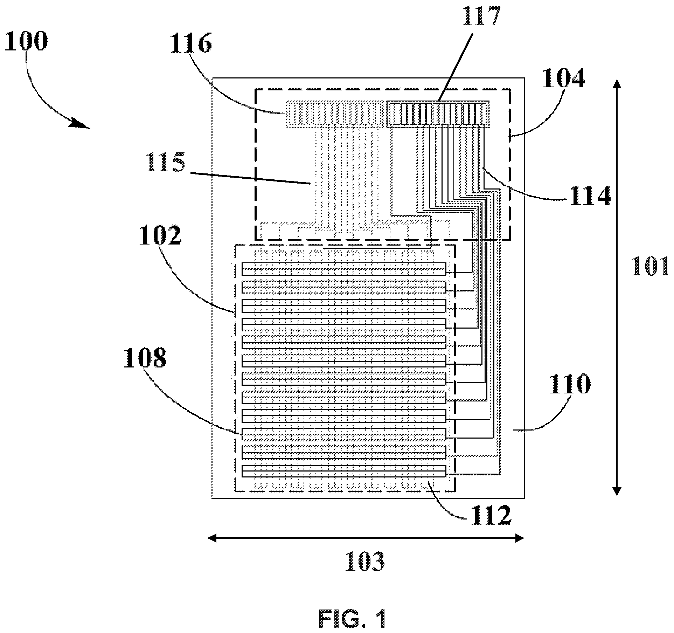

Referring now to Figure 1, a top schematic view of a foldable capacitive touch sensor film 100 in accordance with the principles disclosed herein is shown. Film 100 generally comprises a thin, flexible, rollable, transparent, dielectric substrate 110, a horizontal axis 103, a vertical axis 101, a transparent, electrically conductive, capacitive grid 102, and a transparent, electrically conductive, tail 104. Substrate 110 may comprise any suitable, flexible material that may be rolled, flexed, and/or deformed multiple times without breaking or tearing. For example, in some embodiments, substrate 110 may comprise polyethylene terephthalate (PET) film, polycarbonate, paper, a polymer, or some combination thereof. In some specific examples, substrate 110 comprises DuPont/Teijin Melinex 454 and/or Dupont/Teijin Melinex ST505, the latter being a heat stabilized film specifically designed for processes where heat treatment is involved.

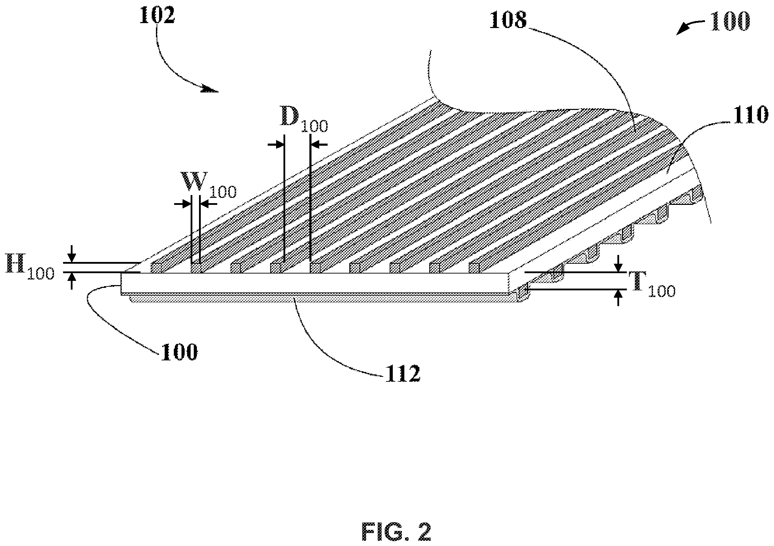

Referring to Figures 1 and 2, grid 102 comprises a first plurality of conductive lines 108 extending in a direction parallel to the horizontal axis 103 and on one side of the dielectric substrate 110, and a second plurality of conductive lines 112 extending in a direction parallel to the vertical axis 101 and on the opposing side of the dielectric substrate 110 (note: the second plurality of conductive lines 112 is shown with hidden lines in Figure 1). The first plurality of conductive lines 108 and second plurality of conductive lines 112 are isolated by the dielectric substrate 110 and form grid 102 that, in turn, enables the recognition of a point of user interaction with film 100. An example of conductive capacitive grid 102 may comprise a 9 x 16 array of conductive lines or more, with a surface area ranging from about 2.5 x 2.5 mm to 2.1 x 2.1 m. In some embodiments, the resistivity of both the lines 108, 112 may range from about 0.005 micro-Ohms to about 500 Ohms per square, while the response time of grid 102 may vary from nanoseconds to picoseconds.

As is best shown in Figure 2, each of the first plurality of conductive lines 108 and the second plurality of conductive lines 112 has a width W₁₀₀ and a height H₁₀₀. In addition, each of the first plurality of conductive lines 108 and the second plurality of conductive lines 112 is separated by a spacing D₁₀₀. Further, the dielectric substrate 110 has a thickness T₁₀₀ measured between the sides of the substrate 110. In some embodiments, the width W₁₀₀ of the conductive lines may vary from 150 to 300 microns, within a tolerance range of +/- 10 %. In addition, the spacing D₁₀₀ between the lines may vary from about 1mm to 5 mm, while height H₁₀₀ may range from about 150 nanometers to about 6 microns. Further, the dielectric substrate 110 may exhibit thickness T₁₀₀ between 5 and 500 microns, with preferred thickness between 100 and 200 microns and preferred surface energy from about 20 D/cm to about 90 D/cm.

Referring again to Figure 1, tail 104 comprises electrical leads 115 and electrical connectors 116 that are disposed on one side of the dielectric substrate 110, and electrical leads 114 and electrical connectors 117 that are disposed on the opposing side of the dielectric substrate 110 (note: the leads 115 are shown with hidden lines in Figure 1). Each of the leads 115 and connectors 116 are electrically coupled to the first plurality of conductive lines 108, and each of the leads 114 and connectors 117 are electrically coupled to the second plurality of conductive lines 112. During operation, electrical signals are carried to and from the lines 108, 112 through leads 115, 114, respectively, and connectors 116, 117, respectively, in order to establish communication between film 100 and some other electronic device.

In some embodiments, each of the lines 108, 112, leads 115, 114, and connectors 116, 117 of film 100 may comprise of any suitable conductive material while still complying with the principles disclosed herein. For example, in some embodiments each of the lines 108, 112, leads 115, 114, and connectors 116, 117 comprise copper, silver, gold, nickel, tin, palladium, conductive polymers, or some combination thereof. Further, in some embodiments, lines 108, 112 are merely plated with a conductive material while still complying with the principles disclosed herein.

Referring again to Figure 1, during operations grid 102 may operate under a mutual capacitance principle, whereby grid 102 forms a capacitor at each intersection of each of the first plurality of conductive lines 108 and each of the second plurality of conductive lines 112. For example, a 9-by-16 array would have 144 independent capacitors (i.e., 9 X 16 = 144). A voltage may be applied to the first plurality of conductive lines 108 and the second plurality of conductive lines 112, such that bringing a finger or conductive stylus near the surface of the film 100 changes the local electric field which reduces the mutual capacitance. The capacitance change at every individual point on grid 102 can be measured to accurately determine the touch location by measuring the voltage in both the horizontal axis 103 and the vertical axis 101. As a result, such mutual capacitance operation may allow multi-touch operation where multiple fingers, palms, or styluses can be accurately tracked at the same time across film 100.

Due at least partially to the fact that the substrate 110 of film 100 is flexible as previously described, the film 100 is also flexible, fold-able, and roll-able. Specifically, in at least some embodiments, film 100 may be deformed or manipulated such that it may maintain a minimum radius of curvature of 1 millimeter while not losing electrical connectivity.

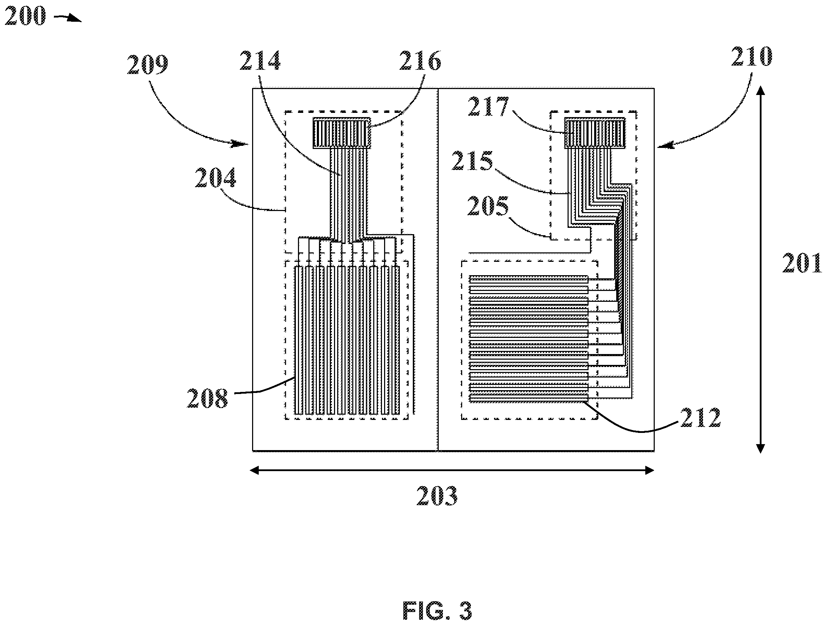

Referring now to Figure 3, a top schematic view of two substrates 209, 210 that make up a flexible, foldable, rollable, resistive touch-sensor film 200 are shown. Film 200 generally comprises a first thin, flexible, transparent, dielectric substrate 209 and a second thin, flexible, transparent, dielectric substrate 210. As is previously described above for the substrate 110 of film 100, each of the first substrate 209 and the second substrate 210 may comprise any suitable, flexible material that may be rolled, flexed, or deformed multiple times without breaking or tearing. Thus, in at least some embodiments, substrates 209, 210 may comprise any and all of the same materials listed above for the substrate 110 while still complying with the principles disclosed herein.

Referring still to Figure 3, the first substrate 209 and the second substrate 210 each comprise a vertical axis 201, and a horizontal axis 203. In addition, the first substrate 209 includes a first plurality of conductive lines 208 disposed on one side of the substrate 209 and oriented parallel to the vertical axis 201. Similarly, the second substrate 210 includes a second plurality of conductive lines 212 printed on one side of the substrate 210 and oriented parallel to the horizontal axis 203. Each of the lines 208, 212 are substantially similar to the lines 108, 112, previously described for film 100, except that the lines 208, 212 are disposed on two separate substrates (e.g., substrate 209, 210) rather than being disposed on opposing sides of a single substrate (e.g., substrate 110). Both the first substrate 209 and the second substrate 210 further include a tail 204, 205, respectively. Tail 204 comprises electrical leads 214 and electrical connectors 216. Electrical leads 214 electrically couple the first plurality of conductive lines 208 to the electrical connectors 216 on the first substrate 209. Tail 205 comprises electrical leads 215 and electrical connectors 217. Electrical leads 215 electrically couple the second plurality of conductive lines 212 to the electrical connectors 217 on the second substrate 210. Other than the fact that the connectors 216, 217 and leads 214, 215 are disposed on separate substrates 209, 210, respectively, the connectors 216, 217 and leads 214, 215 are substantially the same as the connectors 114, 115, and leads 116, 117 previously described. Thus, as is previously described for connectors 114, 115 and leads 116, 117, during operation each of the connectors 216, 217 and leads 214, 215 carry electrical signals to and from the lines 208, 212, respectively, in order to establish communication between film 200 and some other electronic device that may comprise any of the examples previously described.

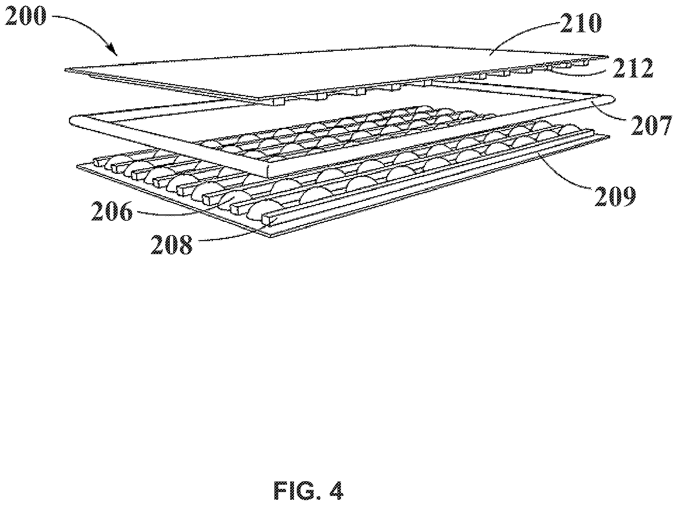

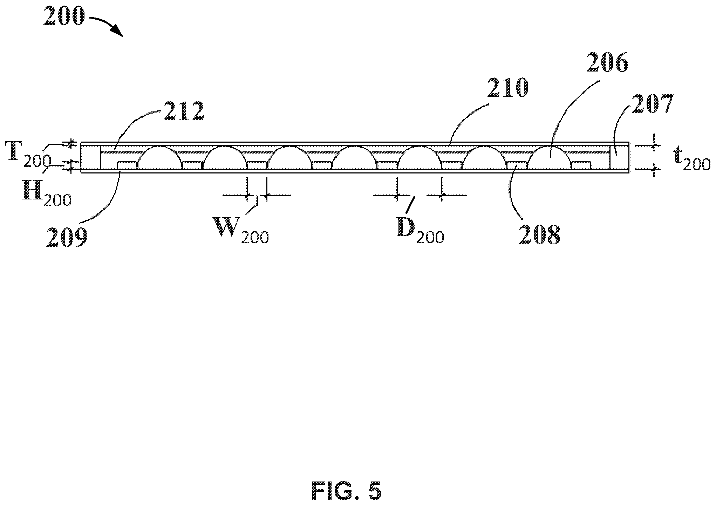

Referring now to Figures 4 and 5 wherein a prospective and a side cross-sectional view, respectively, of film 200 are shown. During assembly of film 200, the first and second substrates 209, 210 are oriented such that the first plurality of conductive lines 208 opposes the second plurality of conductive lines 212. In this embodiment, the first substrate 209 includes a plurality of microstructural insulating protrusions 206. However, it should be appreciated that in other embodiments, the spacer dots 206 may be disposed on the second substrate 210. Microstructural insulating protrusions 206 may also be referred to as spacer dots, spacer microstructures, or spacers, and are coupled to first substrate 209. In this embodiment, film 200 also comprises an adhesive promoting agent 207 which bonds or couples the first substrate 209 to the second substrate 210. In some embodiments, the adhesive promotion agent comprises any suitable material that promotes adhesion between the substrates 209, 210, such as, for example, epoxy resin, urethane, silane, polar acrylic molecules, polymers, or some combination thereof. Thus, as is best shown in Figure 5, during assembly of film 200, the spacing between the lines 208 and the lines 212 is substantially maintained by each of the spacer dots 206 and the adhesive promoting agent 207.

Referring now to Figure 5, each of the first plurality of conductive lines 208 and each of the second plurality of conductive lines 212 has a width W₂₀₀, a height H₂₀₀, and each is separated by spacing D₂₀₀. In addition, the first and second substrate 209, 210 each have a thickness T₂₀₀, and the adhesive promoting agent 207 has a thickness t₂₀₀ which in some embodiment also defines the height of the spacer dots 206. In some embodiments, the width W₂₀₀ may vary from 5 to 10 microns with a tolerance of +/- 10 %. In addition, the spacing D₂₀₀ may vary from about 18 microns to 5 mm. It also be noted that, in at least some embodiments, the spacing D₂₀₀ and width W₂₀₀ are functions of the desired size and resolution of the film 200. Further, in some embodiments, the height H₂₀₀ may range from about 150 nanometers to about 6 microns. Still further, the thickness t₂₀₀ of adhesive promoting agent 207 and therefore the height spacer dots 206 may range from 500 nanometers to 5mm, depending on the height H₂₀₀ of the first and second pluralities of conductive lines 208, 212. Finally, the thickness T₂₀₀ of the first substrate 209 and the second substrate 210 may range between 1 micron and 1 millimeter with a preferred surface energy from 20 dynes/cm to 90 dynes/cm. It should be appreciated that while the substrates 209, 210 of this embodiment have the same thickness T₂₀₀, in other embodiments the substrates 209, 210 may have different thicknesses while still complying with the principles disclosed herein.

Referring again to figures 4 and 5, once film 200 is fully assembled as previously described, the first and second plurality of conductive lines 208, 212 form an X-Y grid that enables the recognition of the point where the user has interacted with the film 200. This grid may have 16 x 9 conductive lines or more, and a grid size of 5 mm x 5 mm square spaced uniform. However, the size of the grid and the number of conductive lines may vary greatly while still complying with the principles disclosed herein. As is best shown in Figure 5, when a force is applied to the substrate 209 or the substrate 210, the spacer dots 406 proximate the location of the applied force are compressed, thereby allowing electrical contact between the lines 208, 212 at that location. The contact between the lines 208, 212 allows an electronic device coupled to film 200 (e.g., through connectors 216, 217) to register a touch event, which may then be tracked across the surface of film 200 through any suitable method known in the art. In the absence of an applied compressive force, the height of the spacer dots 406 (being typically defined by thickness t₂₀₀) is sufficient to prevent contact from occurring between the first and second pluralities of conductive lines 208, 212. Thus, in at least some embodiments, the diameter size of compressible spacer dots 406 may range between 18 microns to 100 microns depending on the height H₂₀₀.

Due at least partially the fact that the substrates 209, 210 making up film 200 are flexible as previously described, the film 200 is also flexible, fold-able, and roll-able. Specifically, in at least some embodiments, film 200 may be deformed or manipulated such that it may maintain a minimum radius of curvature of 1 millimeter while not losing electrical connectivity.

Construction of both a capacitive touch sensor (e.g., film 100) as well as a resistive touch sensor (e.g., film 200) in accordance with the principles disclosed herein may be completed on any suitable roll-to-roll process, wherein the conductive lines (e.g., conductive lines 108, 112, 208, 212) are printed onto the surface of the associated substrate(s). Example methods for the construction of touch sensor films 100, 200 will now be described in more detail below.

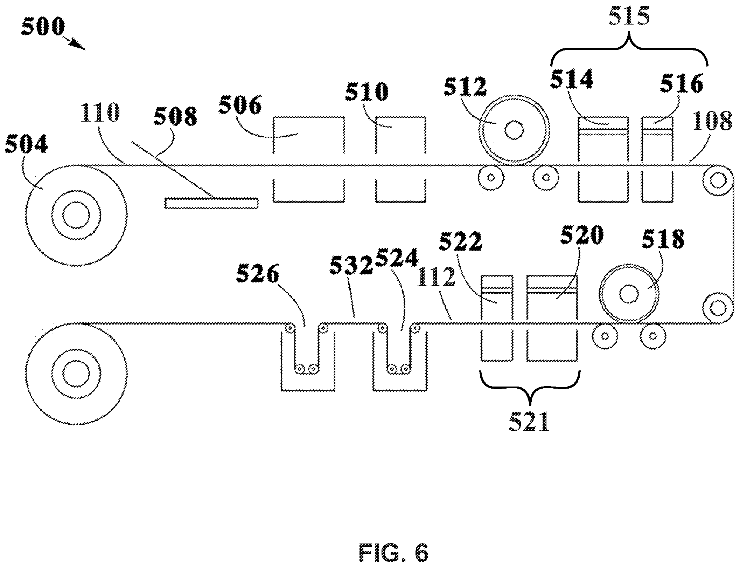

Referring now to Figure 6, wherein an embodiment of a system 500 for fabricating the flexible, foldable, rollable capacitive touch sensor film 100 shown in Figure 1 and 2 is shown. Following the process, substrate 110 is placed on unwind roll 504. The thickness (e.g., thickness T₁₀₀) of substrate 110 should preferably be small enough to avoid excessive stress during flexing of the touch sensor film 100 and, in some embodiments, to improve optical transmissivity. However, a dielectric substrate that is too thin may jeopardize the continuity of this layer or its material properties during the manufacturing process. In some embodiments, a thickness between 1 micron and 1 millimeter may be sufficient. Thin dielectric substrate 110 may be transferred, via any known roll-to-roll handling method, from unwind roll 504 to a first cleaning station 506 (e.g., a web cleaner). As a roll to roll process involves a flexible substrate (e.g., substrate 110), the alignment between substrate 110 and the flexographic master plate 512 (discussed below) may be somewhat challenging. The printing of conductive lines (e.g., lines 108, 112) may be more readily performed if the correct alignment is maintained during the printing process. In an embodiment, positioning cable 508 is used to maintain the right alignment of these two features, in other embodiments other means may be used for this purpose. In some embodiments a first cleaning station 506 comprises a high electric field ozone generator. Ozone which may be generated may then be used to remove impurities, for example, oils or grease, from dielectric substrate 110.

Dielectric substrate 110 then may pass through a second cleaning system 510. In some embodiments, the second cleaning station 510 comprises a web cleaner. The first and the second cleaning systems may be the same or different types of systems. After these cleaning stages, dielectric substrate 110 may go through a first printing process where the first plurality of conductive lines 108 is printed on one of the sides of substrate 110. To achieve the printing of lines 108 on substrate 110, a microscopic pattern is imprinted by a first master plate 512 using, for example, UV curable ink that may have a viscosity between 200 and 2000 cps, but not limited to this range of viscosity. As will be described in more detail below, in some embodiments the amount of ink transferred from first master plate 512 to dielectric substrate 502 is regulated by a high precision metering system and depends on the speed of the process, ink composition, and the patterns, shape, and dimension of the conductive lines 108. In an embodiment, the speed of the machine may vary from less than 20 feet per minute (fpm) to 750 fpm, and in some embodiments it may vary from 50 fpm to 200 fpm. In addition, in an embodiment, the ink may contain plating catalysts. Further, in an embodiment, the first printing station may be followed by a curing station 515. The curing station 515 may comprise, for example, an ultraviolet light curing module 514 with target intensity from about 0.5 mW/cm² to about 50 mW/cm² and wavelength from about 280 nm to about 480 nm. In other embodiments, the curing station 515 may comprise an oven heating module 516 that applies heat within a temperature range of about 20°C to about 125°C. It should be appreciated that in some embodiments, other curing stations and/or modules may also be employed either in addition to or as an alternative to modules 514 and 516. As a result of the curing process carried out in curing station 515, the first plurality of conductive lines 108 is formed on one side of the dielectric substrate 110.

Referring still to Figure 6, in some embodiments once the first plurality of conductive lines 108 is printed on one side of substrate 110, the opposing side of substrate 100 may then go through a second printing station wherein the second plurality of conductive lines 112 is printed thereon. To achieve the printing of lines 112 on substrate 110, a microscopic pattern may be imprinted by a second master plate 518 using UV curable ink that is similar to the ink used to print the lines 108, previously described. As will be described in more detail below, the amount of ink transferred from second master plate 518 to substrate 100 may be regulated by a high precision metering system in substantially the same manner as that mentioned above for the first master plate 512. The second printing station may then be followed by a curing station 521. The curing station 521 may comprise, for example, an ultraviolet light curing module 520 with target intensity from about 0.5 mW/cm² to 50 mW/cm² and wavelength from about 280 nm to about 580 nm. Additionally or alternatively, the curing station 521 may comprise an oven heating module 522 that applies heat within a temperature range of about 20°C to about 125°C. Further, it should be appreciated that in at least some embodiments, other suitable curing stations or modules may be employed either in addition to or in the alternative of the modules 520, 522. As a result of the curing process carried out in curing station 521, the second plurality of conductive lines 112 is formed on one side of the dielectric substrate 110.

Referring still Figure 6, in this embodiment, with printed conductive lines 108, 112 on both sides, the dielectric substrate 110 may be exposed to electroless plating station 524. In this step, a layer of conductive material is deposited on the lines 108, 112. This may be accomplished by submerging first plurality of conductive lines 108 and the second plurality of conductive lines 112 into a plating tank at electroless plating station 524 that may contain compounds of copper or other conductive material in a solution form at a temperature range between 20°C and 90°C (e.g., 40°C). In one example, the deposition rate of the conductive material may be 10 nanometers per minute and within a thickness of about 0.001 to 100 microns, depending on the speed of the web and according to the application requirements. The above described electroless plating process does not require the application of an electrical current and it only plates the patterned areas (e.g., lines 108, 112) containing plating catalysts that were previously activated by the exposition to UV and/or thermal radiation during the curing process (e.g., curing process at curing stations 515, 521). In other embodiments, nickel is used as the plating metal. The copper plating bath may include powerful reducing agents therein, such as, for example, formaldehyde, borohydride and/or hypophosphite, that cause the plating to occur. The plating thickness tends to be uniform compared to electroplating due to the absence of electric fields. Although electroless plating is generally more time consuming than electrolytic plating, electroless plating is well suited for parts with complex geometries and/or many fine features. After the plating step, the fabrication of capacitive touch sensor film 100 is substantially complete.

In some embodiments a washing station 526 follows electroless plating 524. After the plating station 524, capacitive touch sensor film 110 may be cleaned by being submerged into a cleaning tank that contains water at room temperature and then possibly dried through the application of air at room temperature. In another embodiment, a passivation step in a pattern spray may be added after the drying step to prevent any dangerous or undesired chemical reaction between the conductive materials and water.

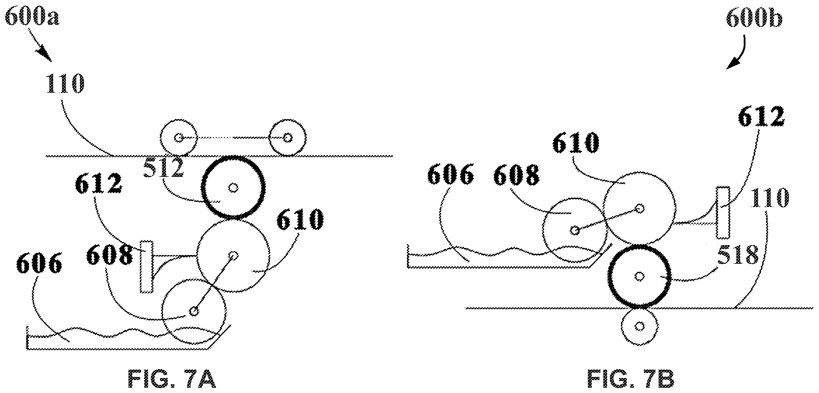

Referring now to Figures 7A and 7B, wherein embodiments of high precision metering systems 600a, 600b for use within the system 500, in accordance with the principles disclosed herein are shown, respectively. High precision ink metering systems 600a, b may control the exact amount of ink that is transferred to substrate 110 by master plates 512, 518, respectively during operation of system 500 shown in Figure 6. Figure 7A depicts a metering system 600a for printing the first plurality of conductive lines 108 on substrate 110, and Figure 7B depicts a metering system 600b for printing the second plurality of conductive lines 112 on substrate 110. In some embodiments, the two systems 600a, 600b may be used in conjunction. In this embodiment, both systems 600a, 600b comprise an ink pan 606, a transfer roll 608, an anilox roll 610, and a doctor blade 612. A portion of the ink contained in ink pan 606 may be transferred to anilox roll 610. Anilox roll 610 may be constructed of a steel or aluminum core which may be coated by an industrial ceramic whose surface contains millions of very fine dimples, known as cells. Depending on the design of the printing process, anilox roll 610 may be either semi-submersed in ink pan 606 or comes into contact with a transfer roll 608. Doctor blade 612 may be used to scrape excess ink from the surface leaving just the measured amount of ink in the cells. Anilox roll 610 then rotates to contact with the flexographic printing plate or master plate which receives the ink from the cells for transfer to substrate 110. The anilox roll 610 of system 600a contacts the master plate 512, while the anilox roll 610 of system 600b contacts the master plate 518. The rotational speed of master plates 512, 518 should preferably match the speed of the web, which may vary between 20 fpm and 750 fpm. It should be noted that the differences between systems 600a and 600b are the location from where substrate 110 is fed and how master plates 512, 518 and anilox rolls 610 are configured. In system 600a show in Figure 7A, the substrate 110 is fed through the top of the system 600a, and master plate 512 is disposed underneath substrate 110 and on top of anilox roll 610. This is in contrast to system 600b shown in Figure 7B, where substrate 100 is fed through the bottom of the system 600b and master plate 518 is disposed on top of substrate 100 and underneath anilox roll 610.

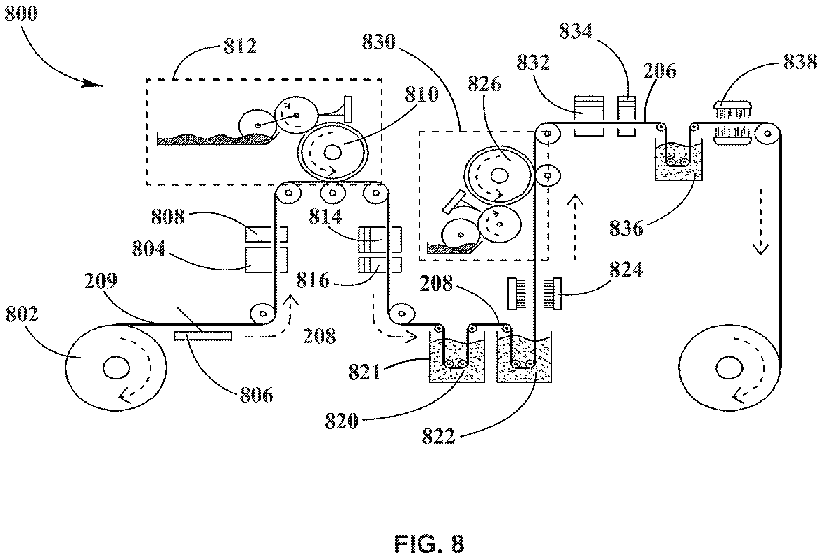

Referring now to Figure 8, wherein an embodiment of a system 800 for fabricating the flexible, foldable, rollable resistive touch sensor film 200 shown in Figure 3-5 is shown. Following the process, the first substrate 209 is placed on unwind roll 802. The thickness of first substrate 209 is chosen as to avoid excessive stress during flexing of the touch sensor and, in some embodiments, to improve optical transmissivity. However, the thickness of first substrate 209 may also be chosen to be thick enough as to not jeopardize the continuity of this layer or its material properties during the manufacturing process. In an embodiment, a thickness between 1 micron and 1 millimeter may be suitable. The first substrate 209 is transferred, via any known roll-to-roll handling method, from an unwind roll 802 to first cleaning system 804. As a roll-to-roll process involves a flexible substrate (e.g., substrate 209), the alignment between the substrate 209 and the flexographic master plate 810 (discussed below) may be somewhat challenging. The printing of conductive lines (e.g., lines 208, 212) may be more readily performed if the correct alignment is maintained during the printing process. In an embodiment, a positioning cable 806 may be used to maintain alignment between these two features, in other embodiments other means may be used for this purpose. In some embodiment, as first cleaning system 804 may comprise a high electric field ozone generator. The ozone generated may then be used to remove impurities, for example, oils or grease, from the first substrate 209.

The first substrate 209 may then pass through a second cleaning system 808. In some embodiments, the second cleaning system 808 may comprise a web cleaner. After the cleaning stages 804 and 804, the first substrate 209 may undergo a first printing process where the first plurality of conductive lines 208 is printed on one side of first substrate 209. To achieve the printing of lines 208 on substrate 110, a microscopic pattern is imprinted by a master plate 810 using, for example, a UV curable ink that may have a viscosity between 200 and 2000 cps or more. As will be described in more detail below, in some embodiments the amount of ink transferred from the first master plate 810 to dielectric substrate 209 is regulated by a high precision metering system 812 and depends on the speed on the process, ink composition, and patterns, shape, and dimensions of the conductive lines 208. In an embodiment, the speed of the machine may vary from 20 feet per minute (fpm) to 750 fpm. In an alternate embodiment, the speed of the machine may vary from 50 fpm to 200 fpm. In an embodiment, the ink may contain plating catalysts. The first printing process may be followed by a curing step. The curing step may comprise, for example, an ultraviolet light curing module 814 with target intensity from about 0.5 mW/cm² to about 50 mW/cm² and wavelength from about 240 nm to about 580 nm. In addition the curing step may comprise an oven heating 816 module that applies heat within a temperature range of about 20°C to about 125°C. It should be appreciated that in some embodiments, other curing stations and/or modules may also be employed either in addition to or as an alternative to modules 814 and 816. After passing through the curing modules 814, 816, the first plurality of lines 208 is formed on top of the first substrate 209.

Referring still to Figure 8, in some embodiments, once the first plurality of conductive lines 208 is printed on substrate 209, first substrate 209 may be exposed to electroless plating. A layer of conductive material 820 may be deposited or disposed on the first plurality of lines 208. In an embodiment, this may be accomplished by submerging the first plurality of lines 208 of the first substrate 209 into a plating tank 821. In an embodiment, the plating tank 821 may contain compounds of copper or other conductive materials in a dissolved state at a temperature range between 20°C and 90°C (e.g., 40°C). In an embodiment, deposition rate of the conductive material 820 may be 10 nanometers per minute and within a thickness of about 0.001 microns to about 100 microns. The deposition rate may depend on the speed of the web and according to the application. This electroless plating process may not require the application of an electrical current and may only plate the patterned areas containing plating catalysts that were previously activated by the exposition to UV radiation during the curing process 814. In an embodiment, nickel may be used as the plating metal. In another embodiment, the copper plating bath may include powerful reducing agents therein, such as formaldehyde, borohydride or hypophosphite, which cause the plating to occur. In an embodiment, plating thickness may be uniform compared to electroplating due to the absence of electric fields. Although electroless plating may generally be more time consuming than electrolytic plating, electroless plating may be well suited for parts with complex geometries and/or many fine features.

In some embodiments a washing process 822 follows electroless plating. In particular, the first substrate 209 may be cleaned by being submerged into a cleaning tank that contains water at room temperature and then preferably goes through a drying step 824 in which it is dried by the application of air at room temperature. In another embodiment, a passivation step in, for example, a pattern spray may be added after the drying step to prevent any dangerous or undesired chemical reaction between the conductive materials and water.

Referring still to Figure 8, after washing process 822, spacer dots (e.g., spacer dots 206 shown in Figures 4 and 5) may be printed onto the first substrate 209. In particular, a pattern of microstructural spacer dots (not specifically shown in Figure 8) is printed on the same side of the first substrate 209 as the first plurality of conductive lines 208. This pattern may be printed by a second master plate 826 using UV curable ink that may have a viscosity between 200 and 2000 cps or higher. In some embodiments the amount of ink transferred from second master plate 826 to substrate 209 is regulated by high precision metering system 830 and depends on the speed of the process, ink composition and the patterns, shape, and dimension of the spacer dots (e.g., spacer dots 206).

In an embodiment, the ink used to print the spacer dots (e.g., spacer dots 206) may be comprised of organic-inorganic nanocomposites utilizing methyl tetraethylorthosilicate or glycidopropyltrimetoxysilane as network formers hydrolyzed using hydrochloric acid. Silica sols, silica powders, ethyl cellulose and hydroxypropyl may be utilized as additives to adjust viscosity. The ink may also comprise a commercially available photoinitiator, such as Cyracure, Flexocure or Doublecure, allowing the use of ultraviolet light curing. In some embodiments the spacer dots may be enhanced optically by nano-particle metal oxides and pigments such as titanium dioxide (TiO₂), barium titanium dioxide (BaTiO), silver (Ag), nickel (Ni), molybdenum (Mo) and platinum (Pt). The index of refraction of the spacer dots preferably will match optically the index of refraction of the first set of conductive lines 805. Nano-particles may also be used to adjust the viscosity of the ink. Furthermore, the shrinkage during curing may be reduced by the incorporation of nanoparticle leads to the ink.

Following the spacer dots (e.g., spacer dots 206) on substrate 209, the first substrate 209 may go through a second curing step, comprising ultraviolet light curing 832 with an intensity about from 0.5 mW/cm² to 20 mW/cm² and/or oven drying 834 at a temperature approximately between 20°C and 150°C. In an embodiment, the spacer dots may have a radius between 80 microns and 40 microns and a height between 500 nanometers and 15 microns. In an embodiment, after the plurality of spacer dots are printed on substrate 209, the first substrate 209 may go through a second washing process 836. The second washing process 836 may be performed, for example, using known conventional washing techniques. After the second washing process 836, the first substrate 209 may be dried using air at room temperature in a second drying step 838.

It should be appreciated that the second substrate 210 of film 200 may go through a parallel process (not shown), similar to that shown and described for system 800. As a result of this parallel process the second set of conductive lines (e.g., conductive lines 212 shown in Figures 3 and 4) are printed on the second substrate 210. In order to achieve the fabrication of substrate 210 of film a different master plate (e.g., different than master plate 810 in Figure 8) is used to print the second plurality of conductive lines 212.

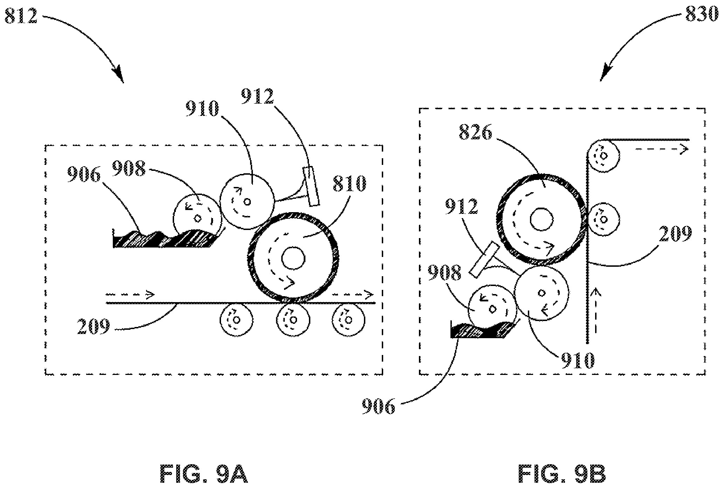

Figures 9A and 9B depict embodiments of high precision metering system 812 and a high precision metering system 830, respectively. System 812 controls the exact amount of ink that is transferred to first substrate 209 by master plate 810 whereas system 830 controls the exact amount of ink that is transferred to substrate 209 by second master plate 826. Furthermore, as previously described, system 812 is configured to print the first plurlality of conductive lines 208 on substrate 209 while system 830 is configured to print the spacer dots (e.g., spacer dots 206 shown in Figures 4 and 5) on substrate 209. The systems both comprise ink pans 906, transfer rolls 908, anilox rollers 910, doctor blades 912 and master plates 810, 826. In one embodiment a portion of the ink contained in ink pan 906 is transferred to anilox rollers 910, possibly constructed of a steel or an aluminum core which may be coated by an industrial ceramic whose surface contains millions of very fine dimples, known as cells. Depending on the design of the printing process, anilox rollers 910 may be either semi-submersed in ink pans 906 or comes into contact with a transfer roll 910. Doctor blades 912 may be used to scrape excess ink from the surface leaving just the measured amount of ink in the cells. Anilox rollers 910 then rotate to contact with the master plates 810, 826 which receive the ink from the cells for transfer to first substrate 209. In some embodiments, the rotational speed of the master plates 810, 826 should preferably match the speed of the web, which may vary between 20 fpm and 750 fpm.

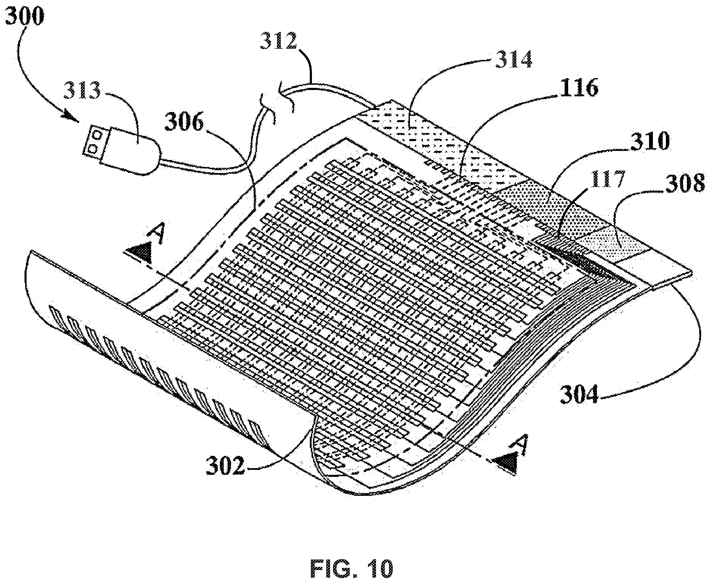

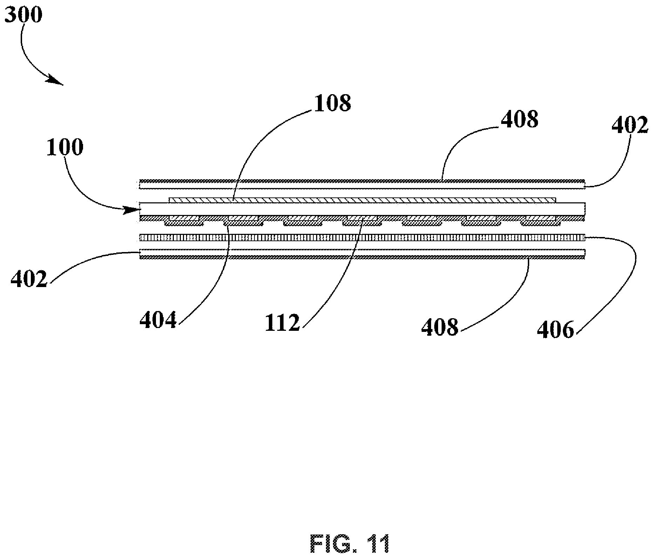

Referring now to Figures 10 and 11 wherein an embodiment of a flexible, rollable, foldable multi-touch sensor structure 300 in accordance with the principles disclosed herein is shown. Foldable multi-touch sensor structure 300 generally comprises a flexible sensor film assembly 302 and a rigid (e.g., plastic) housing 304. Film assembly 302 may comprise any suitable flexible touch sensor film such as, for example, a capacitive touch sensor film (e.g., film 100 shown in Figures 1-2) or a resistive touch sensor film (e.g., film 200 shown in Figures 3-5) while still complying with the principles disclosed herein. As is best shown in Figure 11, in this embodiment, film assembly 302 comprises the capacitive film 100, previously described. In addition assembly 302 further comprises a pair of protective cover substrate layers 402, a flexible battery 406, and a conformal insulating coating 404.

Each of the protective substrate layers 402 cover one of the first plurality of conductive lines 108 or the second plurality of conductive lines 112, each being as previously described, to help protect lines 108, 112 from potential damage which may occur during use. Thus, each of the substrate layers 402 may comprise any suitable, flexible material that may be rolled or flexed multiple times without breaking or tearing such as, for example a fabric, paper, or an elastomer. In addition, in some embodiments, each of the protective cover substrate layers 402 may have a thickness ranging from 100 to 200 microns. Further, in some embodiments, each substrate layer 402 is transparent; however, in other embodiments one or both of the substrate layers 402 may have printed material disposed on their surfaces that is visible to a user of touch sensor structure 300. For example, such suitable printable material could include a keyboard layout, graphics, and/or different colors.

In some embodiments, the outer surface of each of the protective cover substrate layers 402 also includes a scratch resistant coating 408. Scratch resistant coating 408 may be durable, washable, abrasion resistant, chemical resistant, and finger print resistant. The scratch resistant coating 408 may be composed of mono and multifunctional acrylic monomers, and acrylic oligomers and can be applied or deposited over the protective cover substrate 402 using any suitable method, device, or coating technique known in the art, such as, for example, slot die coating, Gravure coating, spray coating, meier rod coating, dip Coating, or some combination thereof. In some embodiments, scratch resistant coating 408 comprises an abrasion resistant polyurethane film, nylon fabric, or other suitable abrasion resistant material.

Referring still to Figure 11, flexible battery 406 is lightweight, ultra-thin, rechargeable, and flexible such that it may be rolled, twisted, folded, or cut into a number of shapes without loss of mechanical integrity or efficiency. Battery 406 may comprise any commercially available paper or flexible battery while still complying with the principles disclosed herein. Specifically, battery 406 may comprise a battery using PowerWrapper™ technology manufactured and sold by Paper Battery Company located in Troy, New York. Additionally, battery 406 may comprise similar commercially available flexible batteries manufactured by Apollo Energy Co. Ltd. located in Shenzhen, China, and Shenzhen Jinke Development Co. Ltd. located in Shenzhen, China while still complying with the principles disclosed herein.

In the embodiment shown, battery 406 is laminated into the foldable multi-touch sensor structure 300 such that it is disposed between the second plurality of conductive lines 112 and one of the protective cover substrate layers 402. As a result, a conformal insulating coating 404 is disposed between the battery 406 and the second plurality of conductive lines 112 in order to insulate the two components from each other during use. However, it should be noted that battery 406 may be placed between different layers of assembly 302 while still conforming to the principles disclosure herein. In some embodiments, multiple flexible batteries (e.g. battery 406) may be installed in assembly 302 such that they are stacked on top of one another. By stacking multiple flexible batteries on top of one another, the total output voltage may be increased.

During operation, battery 406 provides power to assembly 302 and structure 300, and may be charged via an electrical cable (described below) or some other suitable device that may be connected to another electronic device. In some embodiments, battery 406 may produce an output voltage that ranges between approximately 1 and 9 Volts. It should also be appreciated that other embodiments of foldable touch sensor structure 300 may not include flexible battery 406 and/or conformal insulating coating 404, while still complying with the principles disclosed herein. In such embodiments, a standard rechargeable, non-rechargeable, and/or disposable battery (e.g., battery 314 described in more detail below) may be included within housing 304.

Referring back to Figure 10, housing 304 is shown disposed along one side of active sensor area 306. However, it should be appreciated that housing 304 may be disposed along a different side or multiple sides of either sensor area 306 or structure 300 while still complying with the principles disclosed herein. In this embodiment, housing 304 generally comprises an electrical cable 312, a battery 314, a wireless connection module 308, and a programmable micro controller module 310 which are all in electrical communication with the electrical connectors 116, 117 on film 100.

Cable 312 includes a connector 313 and may comprise any suitable electrical cable known in the art. In some embodiments, cable 312 may have a total length equaling between 1 and 6 feet; however, other lengths are possible. During operation, cable 312 may be used to electrically couple sensor structure 300 to another electronic device, through the connector 313, such as, for example, a computer, a laptop, a smartphone, a tablet, etc. In addition, in at least some embodiments, cable 312 may be used to supply electrical power to structure 300 to allow for the operation of structure 300 and/or to charge one or both of the battery 314 and the flexible battery 406. In this embodiment, connector 313 is shown and described herein as being a USB connector, it should be appreciated that in other embodiments, other suitable connectors may be used while still complying with the principles disclosed herein. For example, in other embodiments, cable 312 may include a standard pronged power connector such as for an electrical wall outlet or an external battery. In addition, it should also be appreciated that in other embodiments, no cable 312 is included with structure 300 while still complying with the principles disclosed herein.

Battery 314 may comprise any suitable power source for an electronic device while still complying with the principles disclosed herein. For example, in some embodiments, battery 314 may comprise a standard rechargeable battery similar to those used for other electronic devices such as, for example, laptop computers or tablets. In addition, in some embodiments, battery 314 is recharged through the electrical coupling provided through cable 312 or any other suitable device. In still other embodiments, battery 314 may comprise any suitable non-rechargeable battery or power source while still complying with the principles disclosed herein. Moreover, it should be appreciated that some embodiments of structure 300 do not include battery 314 while still complying with the principles disclosed herein. For example, in at least some of these embodiments, electrical power is supplied to structure through flexible battery 406 previously described.

Referring still to Figure 10, the wireless connection module 308 enables the wireless connection of the foldable multi-touch sensor structure 300 for easy interface with an electronic device (not shown). A suitable electronic device may be any of the electronic devices previously described above. Wireless connection module 308 may utilize any suitable wireless technology known in the art such as, for example, WI-FI, BLUETOOTH®, radio, ultrasonic, etc. In addition, in at least some embodiments, no wireless connection module 308 is included within housing 304 of structure 300 while still complying with the principles disclosed herein.

In this embodiment, programmable micro controller module 310 is a single integrated circuit containing a processor core, memory, and/or programmable input/output peripherals that is suitable for use in automatically controlled products and devices (e.g., structure 300) as an embedded system. In this embodiment, programmable micro controller module 310 receives electrical signals carrying information from the active sensor area 306, which are then processed by module 310 and sent (e.g., through wireless signals emitted from wireless connection module 308 or through cable 312) to an electronic device (not shown). For example, such suitable electronic devices may include a laptop, smart phone, or similar device while still complying with the principles disclosed herein. The programmable micro controller module 310 of this embodiment may be similar to controllers that are manufactured by Synaptic®, located in Santa Clara, California, Maxim Integrated® located in San Jose, California, and/or other similar semiconductor manufacturing companies.

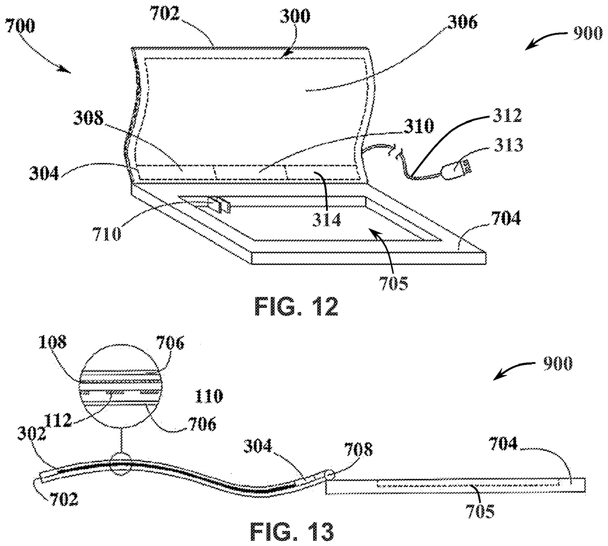

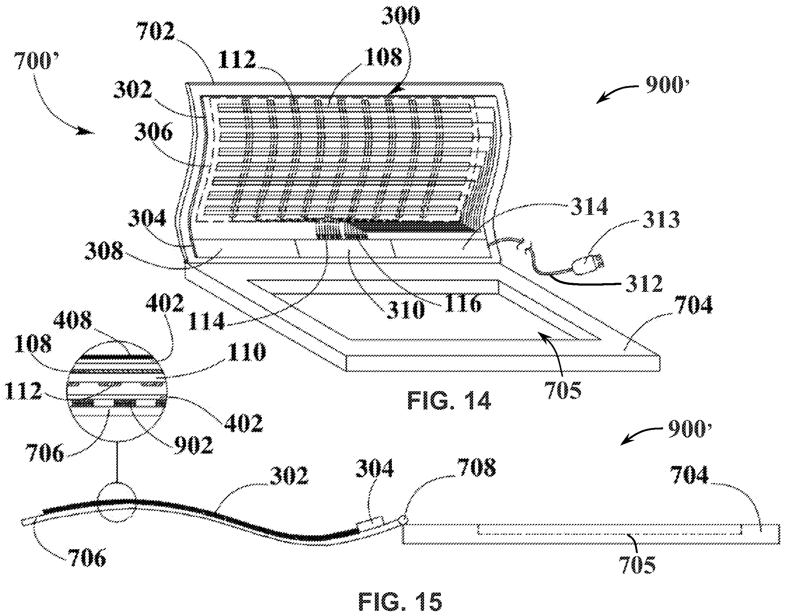

Referring now to Figures 12 and 13 where a prospective view and a side view, respectively, of a touch sensor assembly 900 that comprises the foldable multi-touch sensor structure 300, previously described, coupled to a multi-touch screen protective cover structure 700 are shown. Multi-touch screen protective cover 700 generally comprises a flexible top side assembly 702 and a support assembly or rigid bottom side 704. In this embodiment, the flexible top side assembly 702 includes a pair of protective flexible covers 706 that are disposed on either side of structure 300, previously described. In addition, as is best shown in Figure 13, in this embodiment, protective cover substrates 402 have been removed from multi-touch sensor structure 300. However, in other embodiments (e.g., the embodiment shown in Figures 14 and 15), protective cover substrates 402 may still be disposed on multi-touch sensor structure 300 when it is coupled to protective cover structure 700 while still complying with the principles disclosed herein. Referring still to Figures 12 and 13, protective flexible covers 706 may comprise any material that is durable, roll-able, and robust, so it can be rolled or flexed as many times as needed without breaking or tearing. For example, protective flexible covers 706 may comprise a fabric or plastic while still complying with the principles disclosed herein. In at least some embodiments, covers 706 may be transparent or substantially transparent.

Rigid bottom side 704, of protective cover structure 700, may be constructed out of any suitable rigid material while still complying with the principles disclosed herein. For example, bottom side 704 may be constructed out of plastic, metal, a composite, or some combination thereof. Additionally, in this embodiment, bottom side 704 includes a receptacle 705 that is sized and arranged to releasably engage and house an electronic device (not shown). Examples of suitable electronic devices that may be received within receptacle 705 of bottom side 704 may include, for example, any of the electronic devices previously described above. Multi-touch sensor structure 300 may electrically couple to the electronic device (not shown) via cable 312 and connector 313 or through some other electrical connector such as inter-connector pins 710. In some embodiments, inter-connector pins 710 are electrically coupled to one or more of the components disposed within housing 304 through any suitable device or method. For example, in some embodiments, inter-connector pins 7120 are electrically coupled to internal cabling which is integral to each of the flexible top side assembly 702 and rigid bottom side 704. Additionally, some embodiments allow for the electronic device (not shown) to be electrically coupled to multi-touch sensor structure 300 through a wireless connection via wireless connection module 308, previously described. Referring still to Figures 12 and 13, bottom side 704 also includes a hinged mechanism 708 configured to releasably couple flexible top side assembly 702 to the rigid bottom side 704 and to allow top side assembly 702 to rotate about mechanism 708 relative to bottom side 704 during operation. In some embodiments, the hinged mechanism 708 is a hinge that is connected to at least one of the flexible protective covers 706. It should also be appreciated that in other embodiments, no protective covers 706 are included and the sensor structure 300 is itself attached to the hinged mechanism 708 while still complying with the principles disclosed herein. In addition, hinged mechanism 708 may comprise any suitable material such as, for example, a polymer or metal. Further, in at least some embodiments, hinged mechanism 708 comprises hook and loop connectors. Still further, in other embodiments, no hinged mechanism 708 is included and sensor structure 300 (and/or at least one of the protective covers 706 if so included) is directly attached to bottom side 704 while still complying with the principles disclosed herein.

In some embodiments, the outer dimensions of flexible top side assembly 702 will match the corresponding outer dimensions of the rigid bottom side 704. However, in other embodiments, the outer dimensions of the flexible top side assembly 702 and the bottom side 704 will not match.

Referring now to Figures 14 and 15, wherein a perspective view and a side view of another embodiment of a touch sensor assembly 900' that comprises the multi-touch sensor structure 300, previously described and a multi-touch screen protective cover structure 700' is shown. Multi-touch screen protective cover structure 700' is substantially the same as structure 700, previously described; however, the protective cover substrates 402, previously described, are disposed on multi-touch sensor structure 300, and the multi-touch sensor structure 300 is releasably coupled to one protective flexible cover 706. In the embodiment shown, the structure 300 is releasably coupled to cover 706 through plurality of hook and loop fasteners 902 comprise a plurality of equally spaced strips 902 that extend laterally across top side assembly 702. However, it should be appreciated that the number, shape, and arrangement of the hook and loop fasteners 902 may be varied while still complying with the principles disclosed herein. In addition, in other embodiments any other suitable releasable coupling device may be used to releasably couple structure 300 to cover 706 such as, for example, an adhesive, tape, snaps, buckles, or some combination thereof. Further, in this embodiment, only one protective cover substrate 706 is used; however, in other embodiments, a pair of protective cover substrates 706 may be used (such as is shown in the embodiments of Figures 12 and 13) while still complying with the principles disclosed herein.

Referring generally to Figures 12-15, during operations, a user (not shown) places an electronic device, such as one of those previously described, within the receptacle 705 of bottom side 704 and electrically couples multi-touch sensor structure 300 through either the pins 710 (shown in Figure 12), the cable 312, wireless connection module 308, and/or any other suitable method as previously described. Thereafter, the user may operate the electronic device with the added functionality of the multi-touch sensor structure 300. In particular, the user may interact with the electronic device through manipulation and interaction with the touch sensor film 100 disposed within the structure 300 either in addition to or in lieu of other potential user interaction devices and methods available for the electronic device.

In the manner described, through use of the embodiments disclosed herein, an inexpensive, large, portable, flexible multi-touch sensor surface designed to provide a larger working area may be employed in lieu of conventional touch sensor pads which are small and rigid. In addition, due the flexible nature of structure 300, and films 100, 200, storage and mobility of such multi-touch sensors is greatly enhanced. While many of the embodiments depicted herein have included the use of a capacitive touch sensor (e.g., film 100) it should be appreciated that any and all of the embodiments disclosed herein may employ the use of a resistive touch sensor (e.g., film 200) while still fully complying with the principles disclosed herein.

While preferred embodiments have been shown and described, modifications thereof can be made by one skilled in the art without departing from the scope of the appended claims. The embodiments described herein are exemplary only and are not limiting. Many variations and modifications of the systems, apparatus, and processes described herein are possible within the scope of the appended claims. For example, the relative dimensions of various parts, the materials from which the various parts are made, and other parameters can be varied. Accordingly, the scope of protection is not limited to the embodiments described herein, but is only limited by the claims that follow.

## Claims

1. A touch sensor assembly (900, 900'), comprising:
- a flexible top side assembly (702) comprising a rollable touch sensor (300) having an active touch sensor area (306) that is configured to sense the location of a touch event by a user thereon, wherein the rollable touch sensor further comprises a flexible, rollable dielectric substrate (110), a first plurality of conductive lines (108), a second plurality of conductive lines (112), a pair of flexible, rollable protective cover layers (402) covering the first plurality of conductive lines and the second plurality of conductive lines (112), and a scratch resistant coating (408) composed of multifunctional acrylic monomers disposed on at least one of the pair of the protective cover layers (402), wherein, the rollable touch sensor is configured to be rolled and deformed without losing electrical conductivity; and
- a rigid support assembly (704) including a receptacle (705) that is configured to receive and hold an electronic device, and a hinged mechanism (708) configured to releasably couple the flexible top side assembly (702) to the rigid support assembly (704) and to allow the flexible top side assembly (702) to rotate about the hinged mechanism (708) relative to the rigid support assembly (704) during operation.

2. The touch sensor assembly of claim 1, wherein the touch sensor comprises one of a capacitive touch sensor and a resistive touch sensor.

3. The touch sensor assembly of claim 2, wherein the flexible top side assembly (702) further comprises:
rollable, flexible protective cover releasably connected to the support assembly via the hinge;
wherein the touch sensor is disposed on and connected to the protective cover.

4. The touch sensor assembly of claim 3, wherein the touch sensor is releasably connected to the protective cover.

5. The touch sensor assembly of claim 4, wherein the touch sensor is releasably connected to the protective cover with a hook and loop connector.

6. The touch sensor assembly of claim 1, wherein the touch sensor further comprises a programmable controller module configured to receive and process electrical signals from the active sensor area to determine the location of the touch event on the active sensor area.

7. The touch sensor assembly of claim 6, further comprising a connector cable configured to electrically couple the touch sensor to the electronic device.

8. The touch sensor assembly of claim 6, further comprising a connector pin disposed within the receptacle to electrically couple the touch sensor to the electronic device.

9. The touch sensor assembly of claim 6, further comprising a wireless connection module configured to wirelessly couple the touch sensor to the electronic device.

10. The touch sensor assembly of claim 1, wherein the receptacle (705) of the rigid support assembly (704) is configured to receive one of a smart phone, a tablet computer, and a personal digital assistant (PDA).

11. The touch sensor assembly of claim 1, wherein the touch sensor further comprises a rechargeable battery, wherein the battery is configured to supply electrical power to the touch sensor.

12. The touch sensor assembly of claim 11 wherein the rechargeable battery comprises a flexible, rollable battery.

13. The touch sensor assembly of claim 1, wherein the dielectric substrate comprises at least one of polyethylene terephthalate (PET), polycarbonate, paper, and a polymer.

## Patentansprüche

1. Berührungssensoranordnung (900, 900'), die Folgendes umfasst:
- eine flexible Oberseitenanordnung (702), die einen aufrollbaren Berührungssensor (300) umfasst, der einen aktiven Berührungssensorbereich (306) aufweist, der konfiguriert ist, um die Stelle eines Berührungsereignisses durch einen Benutzer darauf zu erfassen, wobei der aufrollbare Berührungssensor ferner ein flexibles aufrollbares dielektrisches Substrat (110), erste mehrere leitende Leitungen (108), zweite mehrere leitende Leitungen (112), ein Paar von flexiblen aufrollbaren Schutzabdeckschichten (402), die die ersten mehreren leitenden Leitungen und die zweiten mehreren leitenden Leitungen (112) abdecken, und eine kratzfeste Beschichtung (408) umfasst, die aus multifunktionellen Acrylmonomeren besteht, die auf wenigstens einer des Paars von Schutzabdeckschichten (402) eingerichtet ist, wobei der aufrollbare Berührungssensor konfiguriert ist, um aufgerollt und verformt zu werden, ohne elektrische Leitfähigkeit zu verlieren; und
- eine starre Trägeranordnung (704), die einen Steckplatz (705) einschließt, der konfiguriert ist, um eine elektronische Vorrichtung aufzunehmen und zu halten, und
einen Scharniermechanismus (708), der konfiguriert ist, um die flexible Oberseitenanordnung (702) mit der starren Trägeranordnung (704) lösbar zu koppeln und um der flexiblen Oberseitenanordnung (702) zu ermöglichen, sich während eines Betriebs relativ zu der starren Trägeranordnung (704) um den Scharniermechanismus (708) zu drehen.

2. Berührungssensoranordnung nach Anspruch 1, wobei der Berührungssensor einen kapazitiven Berührungssensor oder einen widerstandsfähigen Berührungssensor umfasst.

3. Berührungssensoranordnung nach Anspruch 2, wobei die flexible Oberseitenanordnung (702) ferner Folgendes umfasst:
eine aufrollbare flexible Schutzabdeckung, die über das Scharnier mit der Trägeranordnung lösbar verbunden ist;
wobei der Berührungssensor auf der Schutzabdeckung eingerichtet und mit dieser verbunden ist.

4. Berührungssensoranordnung nach Anspruch 3, wobei der Berührungssensor mit der Schutzabdeckung lösbar verbunden ist.

5. Berührungssensoranordnung nach Anspruch 4, wobei der Berührungssensor mit einem Klettverschlussverbinder mit der Schutzabdeckung lösbar verbunden ist.

6. Berührungssensoranordnung nach Anspruch 1, wobei der Berührungssensor ferner ein programmierbares Steuermodul umfasst, das konfiguriert ist, um elektrische Signale von dem aktiven Sensorbereich zu empfangen und zu verarbeiten, um die Stelle des Berührungsereignisses auf dem aktiven Sensorbereich zu bestimmen.

7. Berührungssensoranordnung nach Anspruch 6, die ferner ein Verbindungskabel umfasst, das konfiguriert ist, um den Berührungssensor mit der elektronischen Vorrichtung elektrisch zu koppeln.

8. Berührungssensoranordnung nach Anspruch 6, die ferner einen Kontaktstift umfasst, der innerhalb des Steckplatzes eingerichtet ist, um den Berührungssensor mit der elektronischen Vorrichtung elektrisch zu koppeln.

9. Berührungssensoranordnung nach Anspruch 6, die ferner ein Modul einer drahtlosen Verbindung umfasst, das konfiguriert ist, um den Berührungssensor mit der elektronischen Vorrichtung drahtlos zu koppeln.

10. Berührungssensoranordnung nach Anspruch 1, wobei der Steckplatz (705) der starren Trägeranordnung (704) konfiguriert ist, um ein Smartphone, einen Tablet-Computer oder einen persönlichen digitalen Assistenten (PDA) aufzunehmen.

11. Berührungssensoranordnung nach Anspruch 1, wobei der Berührungssensor ferner eine wiederaufladbare Batterie umfasst, wobei die Batterie konfiguriert ist, um dem Berührungssensor elektrische Leistung zuzuführen.

12. Berührungssensoranordnung nach Anspruch 11, wobei die wiederaufladbare Batterie eine flexible aufrollbare Batterie umfasst.

13. Berührungssensoranordnung nach Anspruch 1, wobei das dielektrische Substrat Polyethylenterephthalat (PET), Polycarbonat, Papier und/oder ein Polymer umfasst.

## Revendications

1. Ensemble capteur tactile (900, 900'), comprenant :
- un ensemble côté supérieur flexible (702) comprenant un capteur tactile enroulable (300) présentant une zone de capteur tactile active (306) qui est conçue pour détecter l'emplacement d'un événement tactile par un utilisateur sur celui-ci, dans lequel le capteur tactile enroulable comprend en outre un substrat diélectrique flexible enroulable (110), une première pluralité de lignes conductrices (108), une seconde pluralité de lignes conductrices (112), une paire de couches de couverture protectrice enroulable et flexible (402) recouvrant la première pluralité de lignes conductrices et la seconde pluralité de lignes conductrices (112) et un revêtement résistant aux rayures (408) composé de monomères acryliques multifonctionnels disposés sur au moins une couche de la paire de couches de couverture protectrice (402), dans lequel, le capteur tactile enroulable est conçu pour être enroulé et déformé sans perdre la conductivité électrique ; et
- un ensemble support rigide (704) comportant un réceptacle (705) conçu pour recevoir et retenir un dispositif électronique et un mécanisme à charnière (708) conçu pour relier de manière détachable l'ensemble côté supérieur flexible (702) à l'ensemble support rigide (704) et pour permettre à l'ensemble côté supérieur flexible (702) de pivoter autour du mécanisme à charnière (708) par rapport à l'ensemble support rigide (704) pendant le fonctionnement.

2. Ensemble capteur tactile selon la revendication 1, dans lequel le capteur tactile comprend l'un parmi un capteur tactile capacitif et un capteur tactile résistif.

3. Ensemble capteur tactile selon la revendication 2, dans lequel l'ensemble côté supérieur flexible (702) comprend en outre :
une couverture protectrice flexible enroulable reliée de manière détachable à l'ensemble support au moyen de la charnière ;
dans lequel le capteur tactile est disposé et relié à la couverture protectrice.

4. Ensemble capteur tactile selon la revendication 3, dans lequel le capteur tactile est relié de manière détachable à la couverture protectrice.

5. Ensemble capteur tactile selon la revendication 4, dans lequel le capteur tactile est relié de manière détachable à la couverture protectrice avec un élément de fermeture à velcro.

6. Ensemble capteur tactile selon la revendication 1, dans lequel le capteur tactile comprend en outre un module de contrôleur programmable conçu pour recevoir et traiter des signaux électriques provenant de la zone de capteur active pour déterminer l'emplacement de l'événement tactile sur la zone de capteur active.

7. Ensemble capteur tactile selon la revendication 6, comprenant en outre un câble de connecteur conçu pour coupler électriquement le capteur tactile au dispositif électronique.

8. Ensemble capteur tactile selon la revendication 6, comprenant en outre une broche de connecteur disposée à l'intérieur du réceptacle pour coupler électriquement le capteur tactile au dispositif électronique.

9. Ensemble capteur tactile selon la revendication 6, comprenant en outre un module de connexion sans fil conçu pour coupler sans fil le capteur tactile au dispositif électronique.

10. Ensemble capteur tactile selon la revendication 1, dans lequel le réceptacle (705) de l'ensemble support rigide (704) est conçu pour recevoir un dispositif parmi un téléphone intelligent, une tablette et un assistant numérique personnel (PDA).

11. Ensemble capteur tactile selon la revendication 1, dans lequel le capteur tactile comprend en outre une batterie rechargeable, dans lequel la batterie est conçue pour fournir l'alimentation électrique au capteur tactile.

12. Ensemble capteur tactile selon la revendication 11, dans lequel la batterie rechargeable comprend une batterie flexible enroulable.

13. Ensemble capteur tactile selon la revendication 1, dans lequel le substrat diélectrique comprend le polyéthylène téréphtalate (PET), et/ou le polycarbonate, et/ou le papier et/ou un polymère.
